# EUROPÄISCHE PATENTSCHRIFT

(11) **EP 0 953 057 B1**
(45) Veröffentlichungstag und Bekanntmachung des Hinweises auf die Patenterteilung: **19.09.2001**
(21) Anmeldenummer: 97945869.2
(22) Anmeldetag: 24.10.1997
(51) Int. Cl.: C21B 13/00, C21B 5/02

(54) **VERFAHREN ZUM RÜCKFÜHREN EINES AUS EINEM REAKTORGEFÄSS MIT EINEM TRÄGERGAS AUSGETRAGENEN FEINTEILIGEN FESTSTOFFES**
PROCESS FOR RETURNING FINELY DISPERSED SOLIDS DISCHARGED WITH A CARRIER GAS FROM A REACTOR VESSEL
PROCEDE DE RETOUR D'UNE MATIERE SOLIDE FINEMENT DISPERSEE DECHARGEE AVEC UN GAZ PORTEUR DU CONTENEUR D'UN REACTEUR

(30) Priorität: 30.10.1996 AT 189996
(43) Veröffentlichungstag der Anmeldung: 03.11.1999
(73) Patentinhaber: Deutsche Voest-Alpine Industrieanlagenbau GmbH, 40219 Düsseldorf (DE)
(72) Erfinder: STOCKINGER, Josef, A-4060 Leonding (AT); KASTNER, Rainer, Walter, A-4180 Zwettl (AT); MAYR, Herbert, A-4481 Asten (AT); LASSNIG, Herbert, A-4221 Steyregg (AT); HECKMANN, Hado, D-45257 Essen (DE); WIEDER, Kurt, A-4311 Schwertberg (AT); SCHENK, Johannes, A-4040 Linz (AT)
(74) Vertreter: VA TECH Patente GmbH
(86) Internationale Anmeldenummer: EP9705874
(87) Internationale Veröffentlichungsnummer: WO9818969

(56) Entgegenhaltungen:
- EP-A- 0 576 414
- DE-B- 1 137 056
- US-A- 1 713 435
- US-A- 3 266 226
- US-A- 4 733 619
- PATENT ABSTRACTS OF JAPAN vol. 009, no. 003 (M-349), 9.Januar 1985 & JP 59 153721 A (KAWASAKI SEITETSU KK), 1.September 1984,

## Beschreibung

Die Erfindung betrifft ein Verfahren zum Rückführen eines aus einem Reaktorgefäß, insbesondere aus einem Einschmelzvergaser, mittels eines Trägergases bei einer Austragstelle des Reaktorgefäßes ausgetragenen feinteiligen Feststoffes, wie Kohle- und Eisenpartikel, an einer Rückführstelle des Reaktorgefäßes, wobei der Feststoff in einem Feststoffabscheider, insbesondere einem Zyklon, abgeschieden und anschließend mittels eines Fördergases unter Aufrechterhaltung eines Druckunterschiedes zwischen dem Feststoffabscheider und der Rückführstelle in das Reaktorgefäß rückgeführt und bei Eintritt in das Reaktorgefäß unter Zufuhr von Sauerstoff zumindest teilweise vergast und/oder verbrannt wird, sowie eine Einrichtung zur Durchführung des Verfahrens.

Aus der EP-A - 0 493 752 ist ein Verfahren der eingangs beschriebenen Art bekannt, bei dem heiße Stäube aus einem Einschmelzvergaser in einem Heißzyklon abgeschieden und in den Einschmelzvergaser über einen Brenner zurückgeführt werden. Der Feststoff in Form der Stäube wird dem Staubbrenner mittels eines Treibgases unter Injektorwirkung zugeführt. Zur Überwindung einer Druckdifferenz zwischen dem Heißzyklon und dem Einschmelzvergaser erfolgt die Förderung des Feststoffes über ein Schleusensystem mit einer Serie von Behältern, die voneinander durch im Betrieb zu betätigende Absperrorgane getrennt sind.

Das aus dem Einschmelzvergaser abgeleitete, ca. 1050°C heiße Reduktionsgas führt beträchtliche Mengen an staubförmigem Feststoff mit. Die Staubbeladung liegt bei ca. 150 g/m³ Reduktionsgas. Die Temperatur des Reduktionsgases wird unmittelbar nach Austritt aus dem Einschmelzvergaser durch Zugabe von Kühlgas, meist arteigenem Kühlgas, auf ca. 850°C eingestellt. Im Heißzyklon wird der Feststoff, der hauptsächlich aus einem Gemisch von Kohle- und Eisenpartikeln besteht, kontinuierlich abgeschieden. Da dieser Feststoff sehr abrasiv ist, ist das bekannte Schleusensystem nicht nur konstruktiv sehr aufwendig, sondern auch einem großen Verschleiß ausgesetzt. Die Förderung des Feststoffes zum Injektor erfolgt diskontinuierlich, d.h. schub- bzw. batch-weise, so daß eine kontinuierliche Arbeitsweise des Staubbrenners nicht gewährleistet und die Effektivität des Staubbrenners beeinträchtigt ist. Der Feststoff kann sich beim Auffüllen eines Bunkers setzen und es kann zu einem Blockieren des Staubflusses kommen.

Ein Verfahren zum Rückführen eines aus einem Reaktorgefäß mit einem Trägergas ausgetragenen feinteiligen Feststoffes ist aus der EP-B - 0 278 287 bekannt. Hierbei wird der im Feststoffabscheider anfallende Feststoff in einen Sammelbehälter geleitet und dort gesammelt. Der Sammelbehälter dient hier als Ausgleichsbehälter, aus dem mittels eines heißen, aus dem Reaktorgefäß direkt entnommenen Reaktorgases der Feststoff entnommen wird und über einen Injektor direkt in das Reaktorgefäß rückgeführt wird. In dem Sammelbehälter kann es zu Setzungen des Feststoffes und damit zu einem Blockieren des Feststoffflusses kommen, insbesondere durch das heiße, direkt aus dem Reaktorgefäß entnommene Fördergas, durch das Anbackungen mit einem teilweisen Aufschmelzen des Feststoffes verursacht werden können. Der Injektor mündet bei dem bekannten Verfahren direkt in das Reaktorgefäß.

Die Erfindung bezweckt die Vermeidung dieser Nachteile und Schwierigkeiten und stellt sich die Aufgabe, ein Verfahren sowie eine Einrichtung zur Durchführung des Verfahrens zu schaffen, welche ein Rückführen des Feststoffes ohne bewegte und damit einer hohen Abrasion und thermischen Wechselbeanspruchung ausgesetzte Teile ermöglichen, wobei insbesondere die Rückführung kontinuierlich und in kontrollierter Art und Weise erfolgen soll und die Druckdifferenz zwischen dem Austritt des Feststoffabscheiders und dem Reaktorgefäß problemlos überwunden wird. Zudem soll ein kontinuierlicher und von Störungen freier Feststofffluß mit hoher Sicherheit gewährleistet werden können.

Diese Aufgabe wird bei einem Verfahren der eingangs beschriebenen Art dadurch gelöst, daß der abgeschiedene Feststoff mittels eines Treibgases unter Injektorwirkung vom Feststoffabscheider direkt und kontinuierlich abgesaugt, beschleunigt und dem Reaktorgefäß zugeführt wird. Erfindungsgemäß ist damit während des normalen Betriebszustandes eine völlig offene Linie zwischen dem Feststoffabscheider und dem Reaktorgefäß ohne jegliche Stauzonen und Speicher-Einbauten vorgesehen. Das Treibgas saugt den Feststoff direkt vom Feststoffabscheider mitsamt einem geringen Teil des den Feststoffabscheider durchsetzenden Trägergases an. Hierdurch ist gewährleistet, daß der Feststoff immer in Bewegung ist und sich nicht setzen kann. Die Gefahr einer Hängerbildung und damit einer Blockierung des Staubflusses ist hierdurch zuverlässig vermieden.

Die JP-A- 59 153 721 beschreibt einen Reaktor, der über ein Fallrohr mit einem Vorreduktionsofen verbunden ist. Durch das Fallrohr wird vorreduziertes Erzpulver mittels eines injektors zum Reaktor gefördert, und zwar unter zufuhr von Luft zum Injektor ohne gesondertes Treibgas. Eine Rükführung zum Reaktor findet hierbei nicht statt.

Das Treibgas sollte, um eine hohe Stabilität des Betriebes der Feststoffrückführung zu gewährleisten, vorzugsweise gleich schnell oder schneller als die Schallgeschwindigkeit strömen (im überkritischen Druckverhältnis).

Es ist von Vorteil, wenn als Treibgas Stickstoff und/oder gekühltes und gereinigtes Prozeßgas verwendet wird.

Gemäß einer bevorzugten Ausführungsvariante wird das gekühlte und gereinigte Prozeßgas von einem CO- und H₂-hältigen Reduktionsgas gebildet.

Eine Einrichtung zur Durchführung des erfindungsgemäßen Verfahrens mit einem Reaktorgefäß, insbesondere einem Einschmelzvergaser, einer vom Reaktorgefäß ausgehenden Gasableitung, die zu einem Feststoffabscheider, insbesondere einem Zyklon führt, von dem eine den abgeschiedenen Feststoff zu einem Injektor führende Feststoffableitung ausgeht, und mit einer vom Injektor zum Reaktorgefäß führenden und in diesen über einen Staubbrenner einmündenden Feststoffrückführleitung, ist dadurch gekennzeichnet, daß der Feststoffabscheider leitungsmäßig ohne im Betrieb zu betätigende Absperrorgane über den injektor mit der Feststoffrückführleitung und damit mit dem Staubbrenner verbunden ist. Der Aufbau der erfindungsgemäßen Einrichtung ist einfach und unkompliziert und ermöglicht im Normalbetriebsfall einen völlig freien Feststofffluß sowie infolge des direkten kontinuierlichen Absaugens des Feststoffes einen verbesserten Wirkungsgrad des Feststoffabscheiders, so daß Staubverluste stark verringert sind. Der einfache Aufbau der erfindungsgemäßen Einrichtung bewirkt einen sehr geringen Wartungsaufwand und eine hohe Verfügbarkeit und Leistung der Anlage.

Zur Ausscheidung größerer Partikel, beispielsweise grober Kohle- bzw. Koksstücke, ist vorteilhaft dem Feststoffabscheider ein Grobfilter nachgeordnet.

Um bei Störungen in der Staubrückführlinie die Feststoffabscheidung nicht unmittelbar zu behindern, ist gemäß einer bevorzugten Ausführungsform dem Feststoffabscheider ein Feststoffbehälter nachgeordnet, der beim Übergang in die Feststoffableitung mit einem Fluidisierungselement versehen ist. Dieser Feststoffbehälter ist im Normalbetrieb außer Funktion, d.h. der Feststoff durchsetzt diesen Behälter ungehindert im freien Fall.

Um größere Teilchen, die z.B. von einer feuerfesten Ausmauerung der Feststoffableitung stammen, ohne Behinderung des Feststoffflusses ausschleusen zu können, weist zweckmäßig der Injektor einen als Sackbehälter ausgebildeten Feststoffsammelbehälter auf, der mit einer mit einem Absperrorgan verschließbaren Entleerungsöffnung versehen ist, wobei zweckmäßig der Feststoffsammelbehälter im Bereich des Bodens mit einem Fluidisierungselement versehen ist.

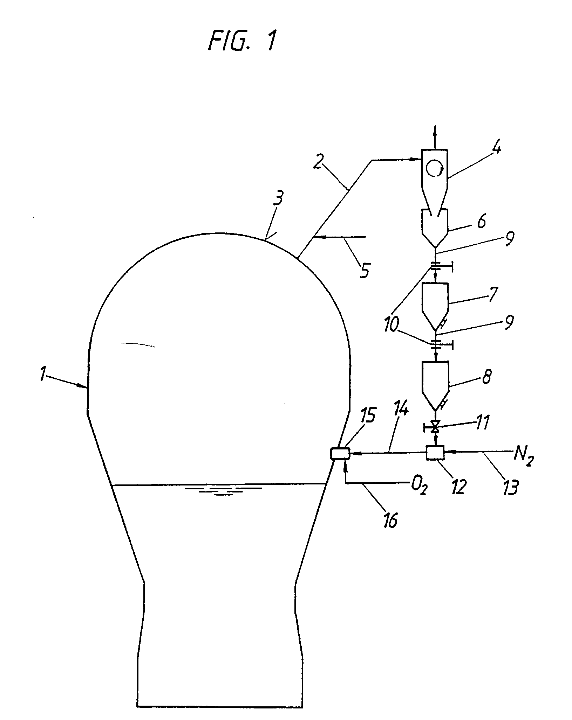

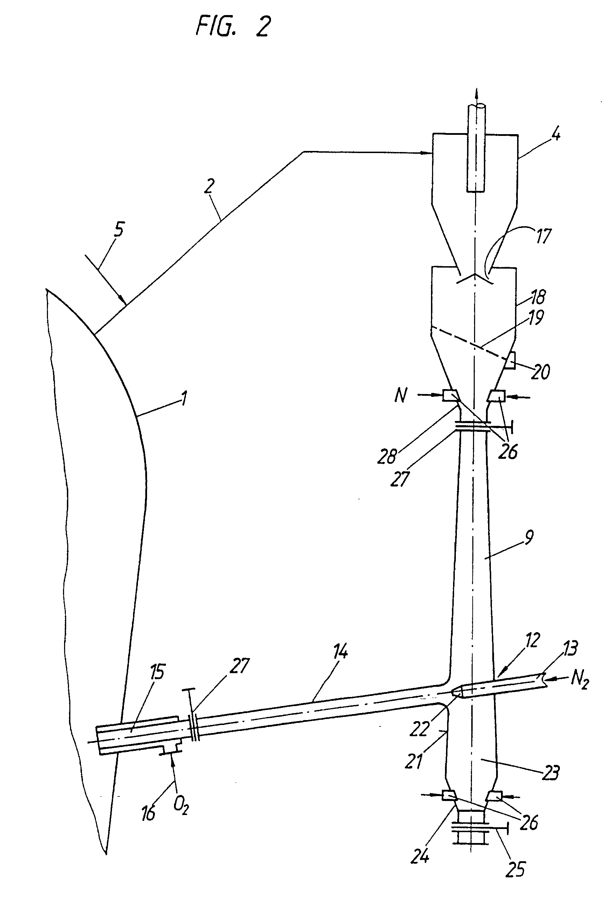

Die Erfindung ist nachstehend anhand eines in der Zeichnung dargestellten Ausführungsbeispieles näher erläutert, wobei Fig. 1 eine Gesamtdarstellung einer Feststoffrückführung gemäß dem Stand der Technik und Fig. 2 eine Darstellung der Feststoffrückführung gemäß der Erfindung in schematischer Weise veranschaulichen.

Gemäß dem in Fig. 1 veranschaulichten Stand der Technik wird aus einem zum Einschmelzen von Eisenschwamm bei gleichzeitiger Erzeugung eines Reduktionsgases aus kohlenstoffhältigem Material dienenden Reaktorgefäß, das als Einschmelzvergaser 1 ausgebildet ist, das durch Kohlevergasung entstehende und nachfolgend als Reduktionsgas eingesetzte Abgas über eine Gasableitung 2, die in einem oberen Bereich 3 des Einschmelzvergasers 1 in diesen einmündet, abgeleitet. Da mit dem Abgas feinkörniger bis staubförmiger Feststoff mitgerissen wird, wird das Abgas, das für diesen Feststoff als Trägergas dient, einem Feststoffabscheider 4, der vorteilhaft als Heißzyklon ausgebildet ist, zugeführt.

Unmittelbar nach Austreten des Reduktionsgases aus dem Einschmelzvergaser 1 wird dem Reduktionsgas artgleiches Kühlgas über eine Kühlgaszuleitung 5 zugeführt, damit das Reduktionsgas die für die nachfolgende Reduktion von Eisenerz günstige Temperatur aufweist und eine zu hohe Temperaturbelastung des Heißzyklons 4 vermieden wird.

Die im Heißzyklon 4 sich abscheidenden Feststoffe sinken nach unten und werden in einem mit dem Heißzyklon integrierten Zyklonbunker 6 gesammelt. Über ein nachfolgendes Bunkersystem wird der Feststoff schub- bzw. batch-weise weiterbefördert. Zu diesem Zweck sind zwischen den Bunkern 6, 7 und 8 in der die Bunker 6, 7 und 8 verbindenden Feststoffableitung 9 jeweils Schieber 10 angeordnet.

Schließlich wird der Feststoff von einem Dosierorgan 11, beispielsweise einem Dosierventil oder gemäß einer anderen Ausführungsform einer Zellenradschleuse (hier nicht dargestellt), möglichst gleichmäßig einem Injektor 12 zudosiert. Der Injektor 12, der beispielsweise mit N₂ als Treibgas - das über die Leitung 13 zugeführt wird - betrieben wird, fördert den Feststoff über eine Feststoffrückführleitung 14, die in einen Staubbrenner 15 mündet, in den Einschmelzvergaser 1. Dem Staubbrenner 15 wird Sauerstoff über eine Sauerstoffzuführleitung 16 zugeführt.

Durch das Verbrennen/Vergasen des C-Anteiles des Staubes agglomerieren die verbleibenden Inertanteile des Feststoffes (Fe, Kohleasche, CaO, SiO₂, ...). Die Agglomeration der Feststoffteilchen bewirkt, daß diese nicht mehr mit dem aus dem Reaktorgefäß ausströmenden Gas ausgetragen werden. Sie sinken zum Boden des Reaktorgefäßes und werden beispielsweise aufgeschmolzen und als Schlacke entnommen.

Der Wartungsaufwand für eine Feststoffrückführung dieser Art ist sehr aufwendig. Die besonderen Problembereiche der Feststoffrückführung sind das Bunkersystem 6 bis 10, d.h. batch-weise Staubförderung, und die Dosierung des Feststoffes. Ein weiterer Nachteil der in Fig. 1 veranschaulichten Feststoffrückführung ist, daß die einzelnen Feststoffbunker 6 bis 10 immer wieder gegen das Gassystem des im Reaktorgefäß 1 stattfindenden Prozesses abgeschiebert werden müssen. Da der Systemdruck, d.h. der Druck im Einschmelzvergaser 1 selbst und auch im nachfolgenden, nicht dargestellten Reduktionsgefäß, in den das im Einschmelzvergaser erzeugte Reduktionsgas eingeleitet wird, Schwankungen unterliegt, kommt es immer wieder zu erhöhten Druckdifferenzen, was in Verbindung mit Gasströmungen zu einem starken Verschleißen der Schieber 10 führt. Um diese Druckdifferenzen in Grenzen zu halten, sind bei der bekannten Einrichtung nicht näher dargestellte Druckausgleichsleitungen zwischen den Feststoffbunkern 6, 7 und 8 einerseits und dem Gassystem des Einschmelzvergasers 1 und Reduktionsgefäßes anderseits notwendig.

In Fig. 2 ist die erfindungsgemäße Staubrückführung veranschaulicht. Der im Heißzyklon 4 abgeschiedene Feststoff gelangt in einen am Zyklonauslaß 17 integrierten Behälter 18. In diesem Behälter 18, der feuerfest ausgemauert ist, befindet sich ein schräg angeordneter Rost 19, der zur Abscheidung größerer Partikel, wie Kohle- oder Koksstücke, dient. Diese werden über eine Entnahmeöffnung 20 aus dem Behälter 18 bei Bedarf entfernt. Von dem Heißzyklon 4 wird der Feststoff, der den Behälter 18 - der im Normalbetrieb funktionslos ist - im freien Fall durchsetzt, über eine Feststoffableitung 9, die als Fallrohr ausgebildet ist, von einem Injektor 12 angesaugt. Dieses Fallrohr 9 ist zylindrisch oder zweckmäßig konisch, sich nach unten erweiternd ausgebildet, um Verstopfungen zu vermeiden. Es ist vorteilhaft ebenfalls feuerfest ausgemauert. Vom Injektor 12 führt die Feststoffrückführleitung 14 zum Staubbrenner 15.

Der Injektor 12 wird vorzugsweise mit einem überkritischen Druckverhältnis betrieben, d.h. die Geschwindigkeit des über den Injektor über die Leitung 13 zugeleiteten Treibgases ist gleich oder größer als die Schallgeschwindigkeit. Als Treibgas kann z.B. Stickstoff oder Kühlgas, wie gekühltes Reduktionsgas verwendet werden. Das Injektorgehäuse 21 geht unterhalb der eigentlichen Treibdüse 22 in einen Sammelbehälter 23 über, in dem grobkörnige Partikel, wie z.B. Abplatzungen oder Ausmauerungsbrocken, abgefangen werden, die zu Verstopfungen führen könnten. Um die grobkörnigen Partikel ausschleusen zu können, ist am Boden 24 des Sammelbehälters 23 ein Auslaß mit einem Absperrorgan 25 oder einer Druckschleuse (hier nicht dargestellt) vorgesehen. Im Behälterboden 24 können zur leichteren Entnahme der Partikel Fluidisierungselemente 26, wie eine Ringdüse, Spülsteine aus Feuerfestmaterial, Elemente aus Sintermaterial, Düsen in Form selbstschließender Ventile etc., vorgesehen sein. Das Fluidisierungsgas kann gleichzeitig als Sekundärgas für den Injektor 12 fungieren. Die Fluidisierung wird so eingestellt, daß feine Teilchen vom Injektor abgesaugt und weggeblasen werden können und sich nur grobe Partikel ansammeln.

Lediglich für Reparatur- und Wartungszwecke sind bei der erfindungsgemäßen Einrichtung Absperrorgane 27 am Beginn des Fallrohres 9 und vor dem Staubbrenner 15 vorgesehen. Der dem Heißzyklon 4 nachgeordnete Behälter 18 kann hierdurch - bei geschlossenem Absperrorgan 27 - auch als Pufferbehälter dienen, falls Probleme beim Betrieb auftreten sollten. Um in diesem Notfall Setzungen der Feststoffe zu vermeiden, sind am Behälterauslauf 28, d.h. am Übergang zum Fallrohr 9, ebenfalls Fluidisierungselemente 26 vorgesehen.

Die Erfindung beschränkt sich nicht auf das beschriebene Ausführungsbeispiel, sondern kann in verschiedener Hinsicht modifiziert werden. Insbesondere ist sie für Reaktorgefäße 1 jeder Art, bei denen es zu einem Feststoffaustrag mit einem Abgas kommt, nicht nur für Einschmelzvergaser, anwendbar.

## Patentansprüche

1. Verfahren zum Rückführen eines aus einem Reaktorgefäß (1), insbesondere aus einem Einschmelzvergaser, mittels eines Trägergases bei einer Austragstelle (bei 2) des Reaktorgefäßes (1) ausgetragenen feinteiligen Feststoffes, wie Kohle- und Eisenpartikel, an einer Rückführstelle (bei 15) des Reaktorgefäßes (1), wobei der Feststoff in einem Feststoffabscheider (4), insbesondere einem Zyklon, abgeschieden und anschließend mittels eines Fördergases unter Aufrechterhaltung eines Druckunterschiedes zwischen dem Feststoffabscheider (4) und der Rückführstelle (bei 15) in das Reaktorgefäß (1) rückgeführt und bei Eintritt in das Reaktorgefäß (1) unter Zufuhr von Sauerstoff zumindest teilweise vergast und/oder verbrannt wird, **dadurch gekennzeichnet, daß** der abgeschiedene Feststoff mittels eines Treibgases unter Injektorwirkung vom Feststoffabscheider (4) direkt und kontinuierlich abgesaugt, beschleunigt und dem Reaktorgefäß (1) zugeführt wird.

2. Verfahren nach Anspruch 1, **dadurch gekennzeichnet, daß** das Treibgas bei Kontakt mit dem Feststoff gleich schnell oder schneller als die Schallgeschwindigkeit strömt.

3. Verfahren nach Anspruch 1 oder 2, **dadurch gekennzeichnet, daß** der Feststoff nach dem Abscheiden gefiltert wird.

4. Verfahren nach einem oder mehreren der Ansprüche 1 bis 3, **dadurch gekennzeichnet, daß** der Feststoff nach Austreten aus dem Feststoffabscheider (4) fluidisiert wird.

5. Verfahren nach einem oder mehreren der Ansprüche 1 bis 4, **dadurch gekennzeichnet, daß** als Treibgas Stickstoff und/oder gekühltes und gereinigtes Prozeßgas eingesetzt wird.

6. Verfahren nach Anspruch 5, **dadurch gekennzeichnet, daß** das gekühlte und gereinigte Prozeßgas von einem CO- und H₂-hältigen Reduktionsgas gebildet wird.

7. Einrichtung zur Durchführung des Verfahrens nach einem oder mehreren der Ansprüche 1 bis 6, mit einem Reaktorgefäß (1), insbesondere einem Einschmelzvergaser, einer vom Reaktorgefäß (1) ausgehenden Gasableitung (2), die zu einem Feststoffabscheider (4), insbesondere einem Zyklon führt, von dem eine den abgeschiedenen Feststoff zu einem Injektor (12) führende Feststoffableitung (9) ausgeht, und mit einer vom Injektor (12) zum Reaktorgefäß (1) führenden und in diesen über einen Staubbrenner (15) einmündenden Feststoffrückführleitung (14), **dadurch gekennzeichnet, daß** der Feststoffabscheider (4) leitungsmäßig ohne im Betreib zu betätigende Absperrorgane über den Injektor (12) mit der Feststoffrückführleitung (14) und damit mit dem Staubbrenner (15) verbunden ist.

8. Einrichtung nach Anspruch 7, **dadurch gekennzeichnet, daß** dem Feststoffabscheider (4) ein Grobfilter (19) nachgeordnet ist.

9. Einrichtung nach Anspruch 7 oder 8, **dadurch gekennzeichnet, daß** dem Feststoffabscheider (4) ein Feststoffbehälter (18) nachgeordnet ist, der beim Übergang in die Feststoffableitung mit einem Fluidisierungselement (26) versehen ist.

10. Einrichtung nach einem oder mehreren der Ansprüche 7 bis 9, **dadurch gekennzeichnet, daß** der Injektor (12) einen als Sackbehälter ausgebildeten Feststoffsammelbehälter (23) aufweist, der mit einer mit einem Absperrorgan (25) verschließbaren Entleerungsöffnung versehen ist.

11. Einrichtung nach Anspruch 10, **dadurch gekennzeichnet, daß** der Feststoffsammelbehälter (23) im Bereich des Bodens (24) mit einem Fluidisierungselement (26) versehen ist.

12. Einrichtung nach einem oder mehreren der Ansprüche 7 bis 11, **dadurch gekennzeichnet, daß** die Feststoffableitung (9) sich vom Feststoffbehälter (18) stetig in Richtung Injektor (12) erweitert.

## Claims

1. Process for returning a finely particulate solid, such as coal and iron particles, which has been discharged from a reactor vessel (1), in particular from a melter gasifier, by means of a carrier gas at a discharge point (at 2) of the reactor vessel (1), to a return point (at 15) of the reactor vessel (1), the solid being separated out in a solids separator (4), in particular a cyclone, and is then returned to the reactor vessel (1) by means of a transport gas, while maintaining a pressure difference between the solids separator (4) and the return point (at 15), and being at least partially gasified and/or burnt on entering the reactor vessel (1), with oxygen being supplied, **characterized in that** the separated solid, by means of a blowing gas and under injector action, is directly and continuously extracted from the solids separator (4), accelerated and fed to the reactor vessel (1).

2. Process according to Claim 1, **characterized in that** the blowing gas, on contact with the solid, flows as quickly as or more quickly than the speed of sound.

3. Process according to Claim 1 or 2, **characterized in that** the solid is filtered after the separation.

4. Process according to one or more of Claims 1 to 3, **characterized in that** the solid is fluidized after it has left the solids separator (4).

5. Process according to one or more of Claims 1 to 4, **characterized in that** the blowing gas used is nitrogen and/or cooled and cleaned process gas.

6. Process according to Claim 5, **characterized in that** the cooled and cleaned process gas is formed by a CO- and H₂-containing reduction gas.

7. Device for carrying out the process according to one or more of Claims 1 to 6, having a reactor vessel (1), in particular a melter gasifier, a gas outlet line (2), which leads out of the reactor vessel (1) to a solids separator (4), in particular a cyclone, from which a solids outlet line (9) which carries the separated solid to an injector (12) emerges, and having a solids return line (14), which leads from the injector (12) to the reactor vessel (1) and opens into the latter via a dust burner (15), **characterized in that** the solids separator (4) is connected by lines, without shut-off members which are to be actuated in operation, to the solids return line (14) via the injector (12), and thus to the dust burner (15).

8. Device according to Claim 7, **characterized in that** a course filter (19) is connected downstream of the solids separator (4).

9. Device according to Claim 7 or 8, **characterized in that** a solids vessel (18), which at its transition into the solids outlet line is provided with a fluidizing element (26), is connected downstream of the solids separator (4).

10. Device according to one or more of Claims 7 to 9, **characterized in that** the injector (12) has a solids collection vessel (23), which is designed as a blind-bottomed vessel and is provided with an emptying opening which can be closed off by means of a shut-off member (25).

11. Device according to Claim 10, **characterized in that** the solids collection vessel (23) is provided, in the region of the base (24), with a fluidizing element (26).

12. Device according to one or more of Claims 7 to 11, **characterized in that** the solids outlet line (9) widens constantly from the solids vessel (18) towards the injector (12).

## Revendications

1. Procédé de recyclage d'une substance solide, finement divisée, évacuée d'un réacteur (1), en particulier d'un gazéificateur à fusion, à l'aide d'un gaz vecteur à un point d'évacuation (en 2) du réacteur (1), comme des particules de charbon et de fer, à un point de recyclage (en 15) du réacteur (1), la substance solide étant déposée dans un séparateur pour substances solides (4), en particulier dans un cyclone, et étant ensuite recyclée dans le réacteur (1) à l'aide d'un gaz de transport, avec maintien d'une différence de pression entre le séparateur pour substances solides (4) et le point de recyclage (en 15), et étant gazéifiée et/ou brûlée au moins partiellement, au cours de l'entrée dans le réacteur (1), avec un apport d'oxygène, **caractérisé en ce que** la substance solide déposée est aspirée directement et en continu, hors du séparateur pour substances solides (4) à l'aide d'un gaz de propulsion sous l'effet d'un injecteur, puis accélérée et conduite au réacteur (1).

2. Procédé selon la revendication 1, **caractérisé en ce que** le gaz de propulsion, lors du contact avec la substance solide, s'écoule à une vitesse égale ou supérieure à la vitesse du son.

3. Procédé selon la revendication 1 ou 2, **caractérisé en ce que** la substance solide est filtrée après le dépôt.

4. Procédé selon une on plusieurs des revendications 1 à 3, **caractérisé en ce que** la substance solide est fluidisé après la sortie hors du séparateur pour substances solides (4).

5. Procédé selon une on plusieurs des revendications 1 à 4, **caractérisé en ce que** l'on utilise, en tant que gaz de propulsion, l'azote et/ou un gaz de processus refroidi et purifié.

6. Procédé selon la revendication 5, **caractérisé en ce que** le gaz de processus refroidi et purifié est formé à partir d'un gaz de réduction contenant CO et H₂.

7. Équipement d'exécution du procédé selon une ou plusieurs des revendications 1 à 6, avec un réacteur (1), en particulier un gazéificateur à fusion, un conduit de gaz (2) provenant du réacteur (1), qui conduit à un séparateur pour substances solides (4), en particulier à un cyclone, duquel sort un conduit pour substances solides (9) conduisant la substance solide déposée vers un injecteur (12), et avec un conduit de recyclage des substances solides (14), conduisant de l'injecteur (12) au réacteur (1), et débouchant dans celui-ci par l'intermédiaire d'un brûleur à poussières (15), **caractérisé en ce que** le séparateur pour substances solides (4) est relié au conduit de recyclage des substances solides (14) et, par conséquent, au brûleur à poussières (15), par le biais de conduites, par l'intermédiaire de l'injecteur (12), sans organes d'obturation à actionner au cours du fonctionnement.

8. Équipement selon la revendication 7, **caractérisé en ce que** l'on dispose, à la suite du séparateur pour substances solides (4), un filtre grossier (19).

9. Équipement selon la revendication 7 ou 8, **caractérisé en ce que** l'on dispose, à la suite du séparateur pour substances solides (4), un récipient pour substances solides (18), qui est pourvu, au cours de la transition dans le conduit pour substances solides, d'un élément de fluidisation (26).

10. Équipement selon une on plusieurs des revendications 7 à 9, **caractérisé en ce que** l'injecteur (12) présente un récipient pour substances solides (23), réalisé sous la forme d'un récipient à sac, qui est pourvu d'un orifice de vidange que l'on peut fermer à l'aide d'un organe d'obturation (25).

11. Équipement selon la revendication 10, **caractérisé en ce que** le récipient de collecte pour substances solides (23) est pourvu, dans la zone du fond (24), d'un élément de fluidisation (26).

12. Équipement selon une on plusieurs des revendications 7 à 11, **caractérisé en ce que** le conduit pour substances solides (9) s'élargit continuellement du récipient pour substances solides (18) en direction de l'injecteur (12).
